# EUROPÄISCHE PATENTSCHRIFT

(11) **EP 2 873 597 B1**
(45) Veröffentlichungstag und Bekanntmachung des Hinweises auf die Patenterteilung: **01.11.2017**
(21) Anmeldenummer: 13192853.3
(22) Anmeldetag: 14.11.2013
(51) Int. Cl.: B62J 15/02

(54) **Vorrichtung zur Befestigung einer Umlaufstrebe am Rahmen eines Zweirades sowie Anordnung der Umlaufstrebe an dem Rahmen des Zweirades**
Device for fixing a mudguard stay on the frame of a bicycle and assembly of the mudguard stay on the frame of a bicycle
Dispositif de fixation d'une tringle de garde-boue sur le cadre d'une bicyclette et agencement de ladite tringle sur le cadre de la bicyclette

(43) Veröffentlichungstag der Anmeldung: 20.05.2015
(73) Patentinhaber: sks metaplast Scheffer-Klute GmbH, 59846 Sundern (DE)
(72) Erfinder: Grabski, Karsten, 59469 Ense (DE)
(74) Vertreter: Basfeld, Rainer

(56) Entgegenhaltungen:
- EP-A1- 2 072 386
- EP-A2- 0 989 055
- DE-U1- 20 300 726
- JP-A- S51 109 643

## Beschreibung

Die vorliegende Erfindung betrifft eine Vorrichtung zur Befestigung einer als Umlaufstrebe ausgebildeten Strebe am Rahmen eines Zweirades gemäß dem Oberbegriff des Anspruchs 1 sowie eine Anordnung einer zur Halterung eines Radschützers dienenden Umlaufstrebe am Rahmen eines Zweirades gemäß dem Oberbegriff des Anspruchs 14.

Mit Umlaufstrebe soll in der vorliegenden Anmeldung eine Strebe bezeichnet werden, die eine im Wesentlichen U-förmige Gestalt mit einem ersten Abschnitt, einem zweiten Abschnitt und einem diese verbindenden Querabschnitt aufweist. Dabei sind die von dem Querabschnitt abgewandten Enden der beiden Abschnitte an unterschiedlichen Seiten des Rades des Zweirads mit dem Zweirad, insbesondere der Gabel des Zweirades verbunden. Der Radschützer ist mit dem Querabschnitt der Umlaufstrebe verbunden. Eine Umlaufstrebe unterscheidet sich daher wesentlich von einer herkömmlichen V-förmigen Strebe. Bei dieser sind die Enden der beiden V-Schenkel auf der gleichen Seite des Rades mit dem Radschützer verbunden, wohingegen der Verbindungsbereich der beiden V-Schenkel mit der Gabel des Zweirades im Bereich der Nabe verbunden ist. Für die Befestigung des Radschützers werden somit mindestens zwei V-förmige Streben benötigt, die auf gegenüberliegenden Seiten des Rades angeordnet sind.

Eine Vorrichtung zur Befestigung einer nicht als Umlaufstrebe ausgebildeten V-förmigen Strebe am Rahmen eines Zweirades ist aus der europäischen Patentanmeldung EP 0 803 429 A2 bekannt. Bei der darin beschriebenen Einrichtung ist ein erstes Teil als Anschlussteil mit einer Aufnahme und ein zweites Teil als Einsteckteil mit einem in die Aufnahme einsteckbaren Abschnitt ausgebildet, wobei durch Einstecken dieses Abschnittes in die Aufnahme eine lösbare Rastverbindung zwischen beiden Teilen gebildet wird. Dabei kann beispielsweise das erste Teil mit dem Verbindungsbereich der beiden V-Schenkel der Strebe und das zweite Teil mit dem Rahmen des Zweirades im Bereich der Nabe verbunden sein. Für das Lösen der Verbindung müssen die beiden Teile in radialer Richtung des Rades auseinander gezogen werden.

Die lösbare Verbindung zwischen den beiden Teilen ist derart gestaltet, dass bei Kräften, die eine vorgegebene Stärke überschreiten, die Verbindung gelöst wird. Derartige Kräfte können beispielsweise auftreten, wenn ein Gegenstand zwischen die Speichen gerät und von der Drehbewegung des Rades unter den Radschützer geschoben wird. Um dann einen Unfall zu vermeiden, löst sich die Verbindung der beiden Teile und gibt den Radschützer frei.

Weil sich bei der EP 0 803 429 A2 die beiden V-Schenkel unter einem Winkel von jeweils etwa 25° zur radialen Richtung von dem Verbindungsbereich wegerstrecken, resultiert auch aus in Umfangsrichtung des Rades wirkenden Kräften eine radiale Zugkraft, die zu einer Lösung der Verbindung der beiden Teile führt. Als nachteilig bei dieser Vorrichtung erweist es sich jedoch, dass sie nur bei V-förmigen Streben funktioniert, nicht jedoch bei Umlaufstreben. Dies deshalb, weil die mit einem der beiden Teile verbindbaren Abschnitte der Umlaufstreben sich im Wesentlichen in radialer Richtung von dem Nabenbereich wegerstrecken.

Die DE 203 00 726 U1 offenbart ebenfalls eine Vorrichtung zur Befestigung einer nicht als Umlaufstrebe ausgebildeten V-förmigen Strebe am Rahmen eines Zweirades. Die Vorrichtung umfasst ein mit den Streben verbundenes erstes Teil, das eine Aufnahme mit einer Öffnung aufweist. Die Vorrichtung umfasst weiterhin ein mit dem Rahmen verbundenes zweites Teil, das einen in die Öffnung hineinragenden Eingriffabschnitt aufweist, wobei durch Einstecken dieses Eingriffabschnitts in die Aufnahme eine lösbare Rastverbindung zwischen den beiden Teilen gebildet wird. Der Eingriffabschnitt ist teilzylindrisch geformt, wohingegen die Öffnung teilhohlzylindrisch geformt ist. Die Öffnung führt in einer radialen Richtung aus der Aufnahme heraus, so dass für das Lösen der Verbindung die beiden Teile in radialer Richtung des Rades auseinander gezogen werden müssen.

Eine Vorrichtung der eingangs genannten Art ist aus der EP 0 989 055 A2. Darin ist eine Vorrichtung zur Befestigung zweier Streben am Rahmen eines Zweirades offenbart, bei der die beiden Streben entweder parallel zueinander in radialer Richtung verlaufen oder sich unter einem kleinen Winkel zur radialen Richtung voneinander wegerstrecken. Die EP 0 989 055 A2 offenbart auf jeder Seite des Rades eine dieser Vorrichtungen, wobei die radschützerseitigen Enden der auf unterschiedlichen Seiten angeordneten Streben über eine den Radschützer umgreifenden Brücke miteinander verbunden sind. Die Vorrichtung umfasst ein mit den Streben verbundenes erstes Teil, das eine Aufnahme mit einer Öffnung aufweist. Die Vorrichtung umfasst weiterhin ein mit dem Rahmen verbundenes zweites Teil, das einen in die Öffnung hineinragenden Eingriffabschnitt aufweist. Die Öffnung führt in einer radialen Richtung aus der Aufnahme heraus und damit im Wesentlichen in der Richtung, in der sich die Streben erstrecken.

Das der vorliegenden Erfindung zugrunde liegende Problem ist die Schaffung einer Vorrichtung der eingangs genannten Art, die eine Lösung der Verbindung zwischen der Strebe und dem Zweirad auch bei der Verwendung von Umlaufstreben gewährleistet. Weiterhin soll eine Anordnung mit einer derartigen Vorrichtung angegeben werden.

Dies wird erfindungsgemäß hinsichtlich der Vorrichtung durch eine Vorrichtung der eingangs genannten Art mit den kennzeichnenden Merkmalen des Anspruchs 1 sowie hinsichtlich der Anordnung durch eine Anordnung der eingangs genannten Art mit den kennzeichnenden Merkmalen des Anspruchs 14 erreicht. Die Unteransprüche betreffen bevorzugte Ausgestaltungen der Erfindung.

Gemäß Anspruch 1 ist vorgesehen, dass die Öffnung in einer Richtung aus der Aufnahme herausführt, die mit der Längserstreckung des Abschnitts der Umlaufstrebe, der im am Zweirad montierten Zustand mit dem ersten oder dem zweiten Teil verbunden ist, einen Winkel zwischen 30° und 150° einschließt, so dass die Auseinanderbewegung der Teile bei dem Lösen der Verbindung im am Zweirad montierten Zustand in einer Richtung erfolgt, die von der radialen Richtung des Rades des Zweirads im Bereich der Umlaufstrebe abweicht. Beispielsweise kann dabei vorgesehen sein, dass die Richtung, in der die Auseinanderbewegung der Teile bei dem Lösen der Verbindung erfolgt, mit der radialen Richtung des Rades einen Winkel zwischen 30° und 150°, vorzugsweise einen Winkel zwischen 60° und 120°, insbesondere einen Winkel zwischen 75° und 105°, beispielsweise einen Winkel von 90° einschließt. Aufgrund der unter einem Winkel zur radialen Richtung erfolgenden Lösung der Verbindung eignet sich die erfindungsgemäße Vorrichtung auch für Umlaufstreben.

Dabei kann die Öffnung in einer Richtung aus der Aufnahme herausführen, die mit der Längserstreckung des Abschnitts der Umlaufstrebe, der im am Zweirad montierten Zustand mit dem ersten oder dem zweiten Teil verbunden ist, einen Winkel zwischen 60° und 120°, insbesondere einen Winkel zwischen 75° und 105°, beispielsweise einen Winkel von 90° einschließt. Insbesondere können dabei die Aufnahme und der Eingriffabschnitt so geformt sein, dass das Herausbewegen des Eingriffabschnitts in der Richtung erfolgt, in der die Öffnung aus der Aufnahme herausführt. Auf diese Weise kann das Lösen der beiden Teile voneinander auch dann erfolgen, wenn auf die Umlaufstrebe im Bereich des Radschützers eine Kraft in Umfangsrichtung des Rades ausgeübt wird.

Es kann vorgesehen sein, dass die Öffnung der Aufnahme im am Zweirad montierten Zustand auf der Oberseite des ersten Teils angeordnet ist. Auf diese Weise wird gewährleistet, dass bei einer sich von der Nabe des Rades nach hinten erstreckenden Umlaufstrebe die Herausbewegung des Eingriffabschnitts aus der Öffnung nach oben erfolgen kann, so dass eine Bewegung der Umlaufstrebe in Bewegungsrichtung des Rades ein Lösen der Verbindung hervorrufen kann.

Es besteht die Möglichkeit, dass die Aufnahme einen Hinterschnitt aufweist, wobei insbesondere der Eingriffabschnitt im verbundenen Zustand von dem Hinterschnitt der Aufnahme in dieser gehalten wird.

Alternativ oder zusätzlich kann vorgesehen sein, dass die Aufnahme einen hohlen teilzylindrischen Bereich aufweist, wobei insbesondere der Eingriffabschnitt einen teilzylindrischen Bereich aufweist, der im verbundenen Zustand in den hohlen teilzylindrischen Bereich der Aufnahme eingreift. Durch beide Maßnahmen kann eine Verbindung zwischen beiden Teilen gewährleistet werden, die bei Überschreiten einer vorgegebenen Kraft gelöst wird.

Es besteht die Möglichkeit, dass die Aufnahme und der Eingriffabschnitt so geformt sind, dass die selbsttätige Lösung der Verbindung mit einem einseitigen Herausbewegen des Eingriffabschnitts aus der Aufnahme beginnt. Beispielsweise können dabei die Aufnahme und der Eingriffabschnitt so geformt sein, dass das Herausbewegen des Eingriffabschnitts am von der Nabe des Rades abgewandten Ende beginnt und in Längsrichtung des Abschnitts der Umlaufstrebe fortschreitet. Auf diese Weise kann gezielt eine Lösung der Verbindung bei in Umfangsrichtung auf die Umlaufstrebe wirkenden Kräften gewährleistet werden.

Es kann vorgesehen sein, dass eines der beiden Teile einen Aufnahmebereich für den Abschnitt der Umlaufstrebe sowie Befestigungsmittel, insbesondere Schraubmittel, für die Festlegung des Abschnitt der Umlaufstrebe umfasst. Weiterhin kann vorgesehen sein, dass eines der beiden Teile Befestigungsmittel, insbesondere Schraubmittel, für die Befestigung an dem Zweirad umfasst.

Gemäß Anspruch 14 ist vorgesehen, dass die Anordnung eine erfindungsgemäße Vorrichtung umfasst. Insbesondere ist vorgesehen, dass die Anordnung zwei erfindungsgemäße Vorrichtungen umfasst, die jeweils an den Abschnitten, insbesondere den Endabschnitten der Umlaufstrebe angebracht sind. Auf diese Weise kann auf beiden Seiten des Rades gleichzeitig ein Lösen der Verbindungen erfolgen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht einer erfindungsgemäßen Anordnung mit einem Vorderrad, einer Gabel und einem Radschützer eines Zweirads sowie einer erfindungsgemäßen Vorrichtung in einem ersten Zustand;
- Fig. 2: eine Detailansicht gemäß dem Pfeil II in Fig. 1 ;
- Fig. 3: eine perspektivische Ansicht der Anordnung in dem ersten Zustand gemäß Fig. 1 ohne Vorderrad;
- Fig. 4: einen Schnitt gemäß den Pfeilen IV - IV in Fig. 3;
- Fig. 5: eine Seitenansicht der Anordnung gemäß Fig. 1 in einem zweiten Zustand;
- Fig. 6: eine Detailansicht gemäß dem Pfeil VI in Fig. 5;
- Fig. 7: eine perspektivische Ansicht der Anordnung in dem zweiten Zustand gemäß Fig. 5 ohne Vorderrad;
- Fig. 8: eine Seitenansicht der Anordnung gemäß Fig. 1 in einem dritten Zustand;
- Fig. 9: eine Detailansicht gemäß dem Pfeil IX in Fig. 8;
- Fig. 10: eine perspektivische Ansicht der Anordnung in dem dritten Zustand gemäß Fig. 8 ohne Vorderrad.

In den Figuren sind gleiche oder funktional gleiche Teile mit gleichen Bezugszeichen versehen.

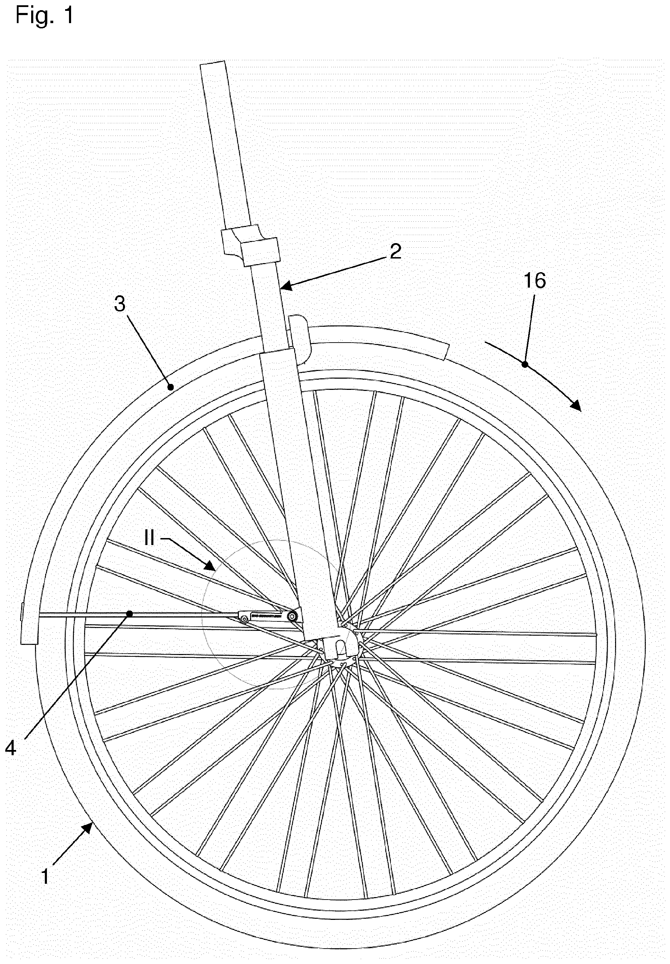

Die aus den Fig. 1 bis Fig. 3 ersichtliche Anordnung umfasst ein Vorderrad 1 und eine Gabel 2 eines Fahrrads. Weiterhin umfasst die Anordnung einen Radschützer 3 und eine Umlaufstrebe 4 zur Halterung des Radschützers 3. Der Radschützer 3 kann aus Metall, vorzugsweise jedoch aus Kunststoff bestehen. Der Radschützer 3 ist torusähnlich gebogen und dem Verlauf eines Fahrradreifens angepasst.

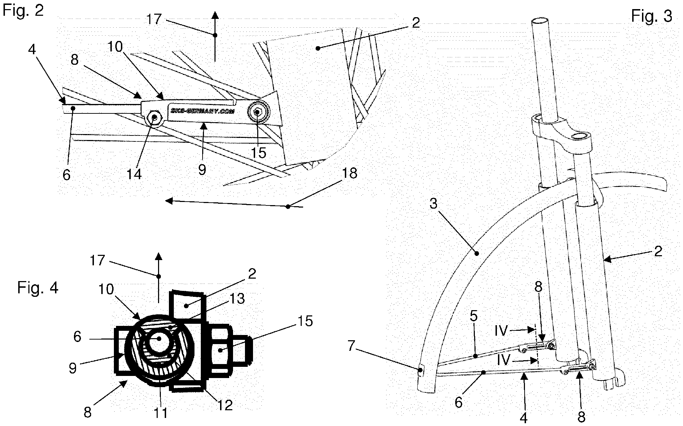

Dabei weist die Umlaufstrebe 4 zwei im Wesentlichen in die gleiche Richtung verlaufende Abschnitte 5, 6 (siehe Fig. 3) und einen diese miteinander verbindenden Querabschnitt auf, der in Fig. 3 von dem Radschützer 3 verdeckt ist. Die Umlaufstrebe 4 kann aus Metall, beispielsweise aus gebogenem Draht bestehen. Durch eine in dieser Anmeldung nicht näher beschriebene Einrichtung 7 kann der Querabschnitt der Umlaufstrebe 4 an dem Radschützer befestigt sein. Diese Einrichtung kann eine Einrichtung gemäß DE 10 2009 060 429 A1 sein. Es besteht jedoch durchaus die Möglichkeit, andere Einrichtungen vorzusehen.

Die aus den Fig. 1 bis Fig. 3 ersichtliche Anordnung umfasst weiterhin zwei Vorrichtungen 8 zur Befestigung der Umlaufstrebe 4 an der Gabel 2 des Fahrrads. Wie Fig. 2 zeigt, umfasst die Vorrichtung 8 ein erstes Teil 9, das an der Gabel 2 angebracht ist, und ein zweites Teil 10, das mit dem in Fig. 3 vorderen Abschnitt 6 der Umlaufstrebe 4 verbunden ist.

Das erste Teil 9 weist eine in montierter Stellung nach oben offene Aufnahme 11 auf, in die ein Eingriffabschnitt 12 des zweiten Teils 10 eingreift. Fig. 4 zeigt, dass die Aufnahme eine obere Öffnung 13 aufweist, durch die der Eingriffabschnitt 12 in die Aufnahme 11 eingreift.

Dabei weist die Aufnahme 11 einen hohlen teilzylindrischen Querschnitt und der Eingriffabschnitt 12 einen dazu passenden teilzylindrischen Querschnitt auf. Fig. 4 zeigt weiterhin, dass der hohle Teilzylinder der Aufnahme 11 sich etwa über 270° erstreckt, so dass dadurch ein Hinterschnitt entsteht, der den Eingriffabschnitt 12 in der Aufnahme 11 hält.

Fig. 2 zeigt, dass das zweite Teil 10 Schraubmittel 14 umfasst, die den in einen Aufnahmebereich des zweiten Teils 10 eingeschobenen Abschnitt 6 der Umlaufstrebe 4 in dem zweite Teil 10 festlegen können (siehe auch Fig. 4). Fig. 2 und Fig. 4 zeigen weiterhin, dass das erste Teil 9 Schraubmittel 15 umfasst, die das erste Teil 9 an der Gabel 2 befestigen können.

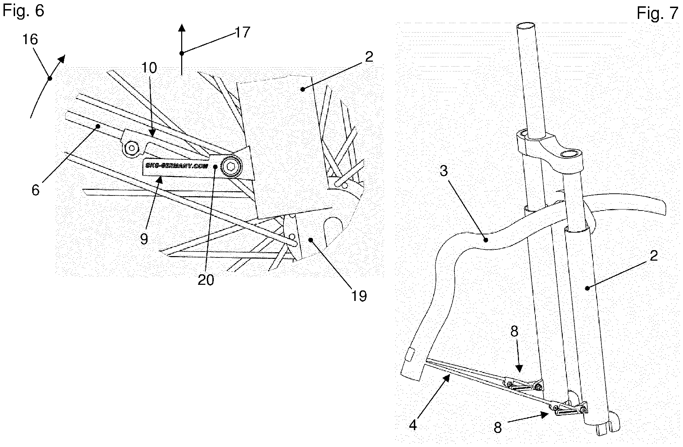

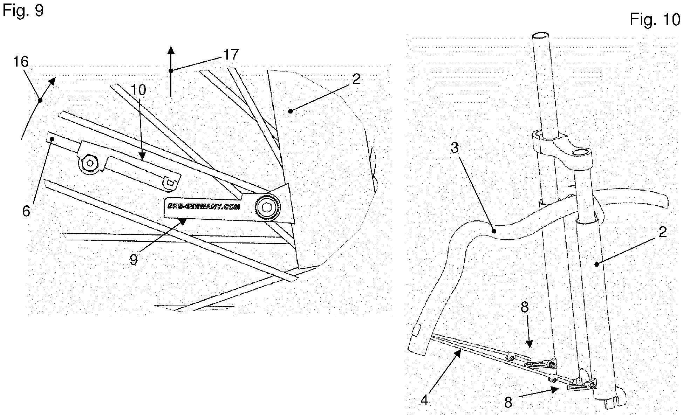

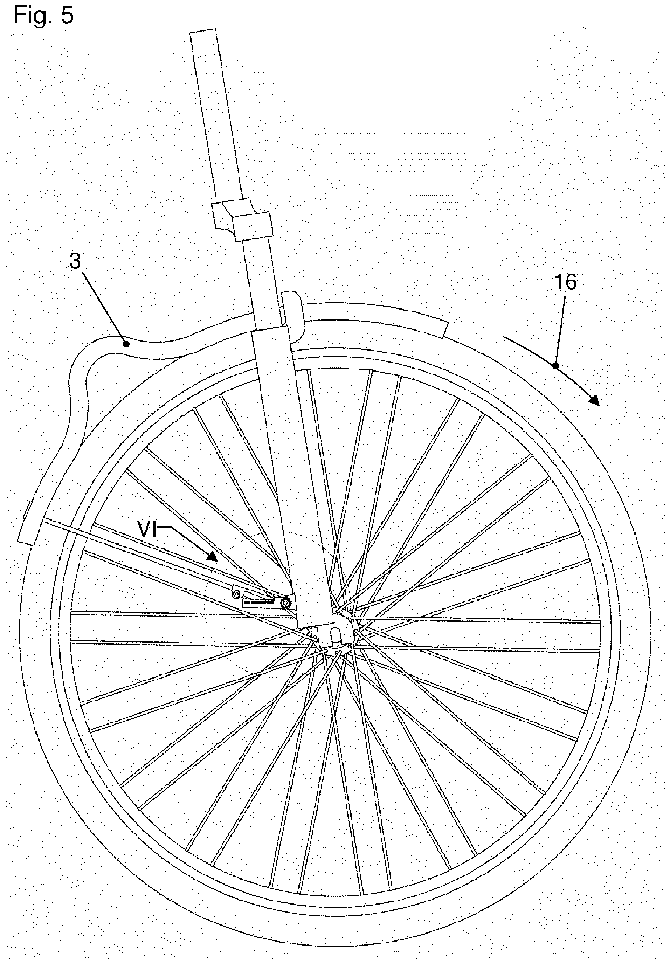

Der Geometrie des Radschützers 3 lässt sich entnehmen, dass die Drehbewegung des Rades 1 im Uhrzeigersinn beziehungsweise in Richtung der Pfeile 16 in den Fig. 1, Fig. 5, Fig. 6 und Fig. 8 erfolgt. Der Vergleich der Fig. 2 mit den Fig. 6 und Fig. 9 zeigt das Lösen der Verbindung zwischen erstem und zweitem Teil 9, 10 im Falle eines unvorhergesehenen Ereignisses, das beispielsweise zu einer Deformation des Radschützers 3 führt (siehe dazu auch die Fig. 7 und 10).

Aufgrund der in Gebrauchsstellung oben angeordneten Öffnung 13 der Aufnahme 11 erfolgt die Herausbewegung des Eingriffabschnitts 12 aus der Aufnahme 11 ebenfalls im Wesentlichen nach oben in Richtung des Pfeiles 17 in Fig. 4 beziehungsweise in den Fig. 2, Fig. 5 und Fig. 8. Diese Richtung des Pfeiles 17 ist dabei senkrecht zur Längserstreckung des Abschnitts 6 der Umlaufstrebe 4 (siehe Fig. 2 und Fig. 4) im miteinander verbundenen Zustand der Teile 9, 10. Weiterhin ist die Richtung des Pfeiles 17 dabei auch im Wesentlichen senkrecht zur radialen Richtung 18 des Rades 1 im Bereich der Umlaufstrebe 4 (siehe Fig. 2).

Fig. 6 zeigt, dass das Herausbewegen des Eingriffabschnitts 12 aus der Aufnahme 11 zwar im Wesentlichen nach oben erfolgt, dass die Bewegung aber an der radial weiter außen liegenden beziehungsweise von der Nabe 19 des Rades 1 abgewandten Seite der Vorrichtung 8 beginnt. Dies hat seinen Grund insbesondere darin, dass die auf die Umlaufstrebe 4 beziehungsweise deren Abschnitte 5, 6 einwirkenden Kräften im Wesentlichen in Umfangsrichtung beziehungsweise in Richtung des Pfeiles 16 wirken. Dadurch wird der Eingriffabschnitt 12 des zweiten Teils 10 von links nach rechts in Fig. 6 aus der Aufnahme 11 des ersten Teils 9 nach oben heraus gedreht, wobei eine Drehung um einen mit dem Bezugszeichen 20 versehenen Bereich erfolgt.

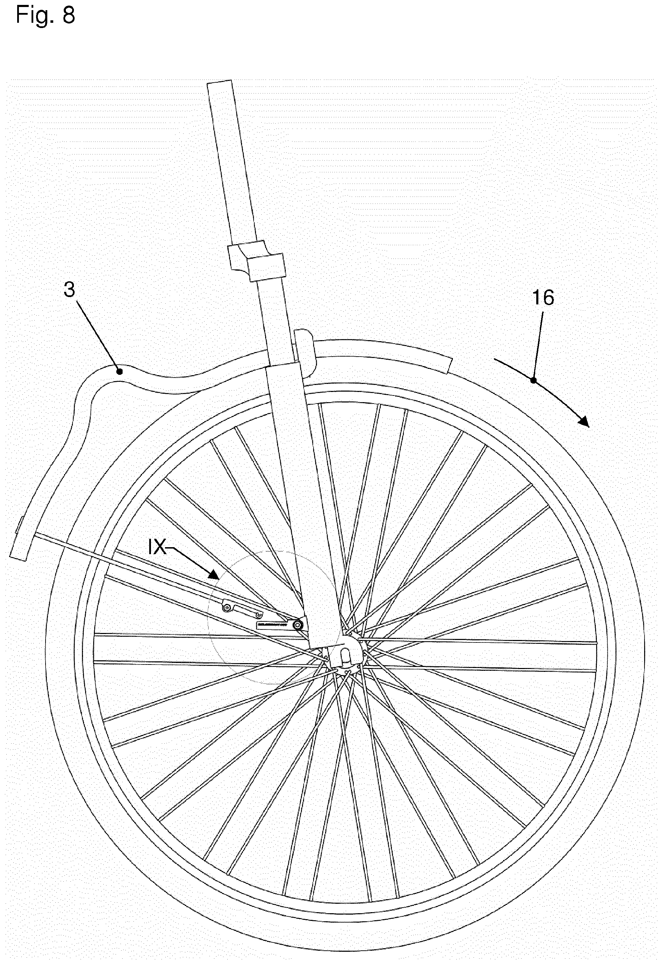

Fig. 8, Fig. 9 und Fig. 10 zeigen dann die Endstellung dieser Bewegung, in der die beiden Teile 9, 10 vollständig voneinander gelöst sind.

Es besteht durchaus die Möglichkeit, dass ein mit einer Aufnahme versehenes erstes Teil mit dem Abschnitt 6 der Umlaufstrebe 4 verbindbar oder verbunden ist und dass ein mit einem Eingriffabschnitt versehenes zweites Teil mit einem Teil des Zweirads, insbesondere der Gabel 2 verbindbar ist.

## Patentansprüche

1. Vorrichtung (8) zur Befestigung einer als Umlaufstrebe (4) ausgebildeten Strebe am Rahmen (2) eines Zweirades, die zur Halterung eines Radschützers (3) dient, umfassend
- mindestens ein erstes, an dem Zweirad oder einem Abschnitt der Umlaufstrebe (4) befestigbares oder befestigtes Teil (9), das eine Aufnahme (11) mit einer Öffnung (13) aufweist,
- mindestes ein zweites, an einem Abschnitt der Umlaufstrebe (4) oder dem Zweirad befestigbares oder befestigtes Teil (10), das einen Eingriffabschnitt (12) aufweist, der im am Zweirad montierten Zustand zumindest teilweise durch die Öffnung (13) in die Aufnahme (11) des ersten Teils (9) hineinragt, wobei die Verbindung zwischen dem Eingriffabschnitt (12) und der Aufnahme (11) lösbar ist und sich dann selbsttätig löst, wenn eine die Teile (9, 10) auseinanderziehende Kraft einen vorgegebenen Grenzwert überschreitet,
**dadurch gekennzeichnet, dass** die Öffnung (13) in einer Richtung (17) aus der Aufnahme (11) herausführt, die mit der Längserstreckung des Abschnitts (6) der Umlaufstrebe (4), der im am Zweirad montierten Zustand mit dem ersten oder dem zweiten Teil (9, 10) verbunden ist, einen Winkel zwischen 30° und 150° einschließt, so dass die Auseinanderbewegung der Teile (9, 10) bei dem Lösen der Verbindung im am Zweirad montierten Zustand in einer Richtung (17) erfolgt, die von der radialen Richtung (18) des Rades (1) des Zweirads im Bereich der Umlaufstrebe (4) abweicht.

2. Vorrichtung (8) nach Anspruch 1, **dadurch gekennzeichnet, dass** die Richtung (17), in der die Auseinanderbewegung der Teile (9, 10) bei dem Lösen der Verbindung erfolgt, mit der radialen Richtung (18) des Rades (1) einen Winkel zwischen 30° und 150° einschließt.

3. Vorrichtung (8) nach einem der Ansprüche 1 oder 2, **dadurch gekennzeichnet, dass** die Öffnung (13) in einer Richtung (17) aus der Aufnahme (11) herausführt, die mit der Längserstreckung des Abschnitts (6) der Umlaufstrebe (4), der im am Zweirad montierten Zustand mit dem ersten oder dem zweiten Teil (9, 10) verbunden ist, einen Winkel zwischen 60° und 120° einschließt.

4. Vorrichtung (8) nach einem der Ansprüche 1 bis 3, **dadurch gekennzeichnet, dass** die Aufnahme (11) und der Eingriffabschnitt (12) so geformt sind, dass das Herausbewegen des Eingriffabschnitts (12) in der Richtung (17) erfolgt, in der die Öffnung (13) aus der Aufnahme (11) herausführt.

5. Vorrichtung (8) nach einem der Ansprüche 1 bis 4, **dadurch gekennzeichnet, dass** die Öffnung (13) der Aufnahme (11) im am Zweirad montierten Zustand auf der Oberseite des ersten Teils (9) angeordnet ist.

6. Vorrichtung (8) nach einem der Ansprüche 1 bis 5, **dadurch gekennzeichnet, dass** die Aufnahme (11) einen Hinterschnitt aufweist.

7. Vorrichtung (8) nach Anspruch 6, **dadurch gekennzeichnet, dass** der Eingriffabschnitt (12) im verbundenen Zustand von dem Hinterschnitt der Aufnahme (11) in dieser gehalten wird.

8. Vorrichtung (8) nach einem der Ansprüche 1 bis 7, **dadurch gekennzeichnet, dass** die Aufnahme (11) einen hohlen teilzylindrischen Bereich aufweist.

9. Vorrichtung (8) nach Anspruch 8, **dadurch gekennzeichnet, dass** der Eingriffabschnitt (12) einen teilzylindrischen Bereich aufweist, der im verbundenen Zustand in den hohlen teilzylindrischen Bereich der Aufnahme (11) eingreift.

10. Vorrichtung (8) nach einem der Ansprüche 1 bis 9, **dadurch gekennzeichnet, dass** die Aufnahme (11) und der Eingriffabschnitt (12) so geformt sind, dass die selbsttätige Lösung der Verbindung mit einem einseitigen Herausbewegen des Eingriffabschnitts (12) aus der Aufnahme (11) beginnt.

11. Vorrichtung (8) nach Anspruch 10, **dadurch gekennzeichnet, dass** die Aufnahme (11) und der Eingriffabschnitt (12) so geformt sind, dass das Herausbewegen des Eingriffabschnitts (12) am von der Nabe (19) des Rades (1) abgewandten Ende beginnt und in Längsrichtung des Abschnitts (6) der Umlaufstrebe (4) fortschreitet.

12. Vorrichtung (8) nach einem der Ansprüche 1 bis 11, **dadurch gekennzeichnet, dass** eines der beiden Teile (9, 10) einen Aufnahmebereich für den Abschnitt der Umlaufstrebe sowie Befestigungsmittel für die Festlegung des Abschnitt (6) der Umlaufstrebe (4) umfasst.

13. Vorrichtung (8) nach einem der Ansprüche 1 bis 12, **dadurch gekennzeichnet, dass** eines der beiden Teile (9, 10) Befestigungsmittel für die Befestigung an dem Zweirad umfasst.

14. Anordnung einer zur Halterung eines Radschützers (3) dienenden Umlaufstrebe (4) am Rahmen (2) eines Zweirades mittels einer Vorrichtung (8), **dadurch gekennzeichnet, dass** die Vorrichtung (8) eine Vorrichtung (8) nach einem der Ansprüche 1 bis 13 ist.

15. Anordnung nach Anspruch 14, **dadurch gekennzeichnet, dass** die Anordnung zwei Vorrichtungen (8) nach einem der Ansprüche 1 bis 13 umfasst, die jeweils an den Abschnitten (5, 6) der Umlaufstrebe (4) angebracht sind.

## Claims

1. Device (8) for securing a stay designed in the form of a mudguard stay (4) onto the frame (2) of a bicycle which stay is used for securing a mudguard (3), comprising
- at least one first part (9) which can be secured or is secured onto the bicycle or a section of the mudguard stay (4), which part comprises a mount (11) with an opening (13),
- at least one second part (10) which can be secured or is secured onto a section of the mudguard stay (4) or the bicycle, which part comprises an engagement section (12) which in a position mounted on the bicycle projects at least partly through the opening (13) into the mount (11) of the first part (9), wherein the connection between the engagement section (12) and the mount (11) is detachable and is then released automatically if a force separating the parts (9, 10) exceeds a predefined threshold,
**characterised in that** the opening (13) leads in direction (17) out of the mount (11) which forms with the longitudinal extension of the section (6) of the mudguard stay (4), which when mounted on the bicycle is connected to the first or second part (9, 10), an angle of between 30° and 150°, so that the separation movement of the parts (9, 10) is performed when releasing the connection when mounted on the bicycle in a direction (17) which differs from the radial direction (18) of the wheel (1) of the bicycle in the region of the mudguard stay (4).

2. Device (8) according to claim 1, **characterised in that** the direction (17), in which the separation movement of the parts (9,10) is performed when releasing the connection, forms an angle of between 30° and 150° with the radial direction (18) of the wheel (1).

3. Device (8) according to any one of claims 1 or 2, **characterised in that** the opening (13) leads in direction (17) out of the mount (11), which forms with the longitudinal extension of the section (6) the mudguard stay (4), which is connected when mounted on the bicycle to the first or the second part (9, 10), an angle of between 60° and 120°.

4. Device (8) according to any one of claims 1 to 3, **characterised in that** the mount (11) and the engagement section (12) are shaped so that the outwards movement of the engagement section (12) is performed in a direction (17) in which the opening (13) leads out of the mount (11).

5. Device (8) according to any one of claims 1 to 4, **characterised in that** the opening (13) of the mount (11) when mounted on the bicycle is arranged on the upper side of the first part (9).

6. Device (8) according to any one of claims 1 to 5, **characterised in that** the mount (11) has an undercut.

7. Device (8) according to claim 6, **characterised in that** the engagement section (12) in the connected state is held by the undercut of the mount (11) in the latter.

8. Device (8) according to any one of claims 1 to 7, **characterised in that** the mount (11) has a hollow partly cylindrical section.

9. Device (8) according to claim 8, **characterised in that** the engagement section (12) has a partly cylindrical section, which in the connected state engages in the hollow partly cylindrical section of the mount (11).

10. Device (8) according to any one of claims 1 to 9, **characterised in that** the mount (11) and the engagement section (12) are shaped so that the automatic release of the connection begins with a one-sided movement of the engagement section (12) out of the mount (11).

11. Device (8) according to claim 10, **characterised in that** the mount (11) and the engagement section (12) are shaped so that the outwards movement of the engagement section (12) begins at the end facing away from the hub (19) of the wheel (1) and progresses in the longitudinal direction of the section (6) of the mudguard stay (4).

12. Device (8) according to any one of claims 1 to 11, **characterised in that** one of the two parts (9, 10) comprises a mounting area for the section of the mudguard stay and securing means for securing the section (6) of the mudguard stay (4).

13. Device (8) according to any one of claims 1 to 12, **characterised in that** one of the two parts (9, 10) comprises securing means for securing onto the bicycle.

14. Arrangement of a mudguard stay (4) used for mounting a mudguard (3) on the frame (2) of a bicycle by means of a device (8), **characterised in that** the device (8) is a device (8) according to any one of claims 1 to 13.

15. Arrangement according to claim 14, **characterised in that** the arrangement comprises two devices (8) according to any one of claims 1 to 13 which are attached respectively to sections (5, 6) of the mudguard stay (4).

## Revendications

1. Dispositif (8) destiné à fixer une tringle conçue comme une tringle en boucle (4) sur le cadre (2) d'une bicyclette en vue de la fixation d'un garde-boue (3), comprenant
- au moins une première pièce (9) qui peut être fixée ou qui est fixée à la bicyclette ou à une partie de la tringle en boucle (4) et qui présente un logement (11) avec une ouverture (13),
- au moins une deuxième pièce (10) qui peut être fixée ou qui est fixée à une partie de la tringle en boucle (4) ou à la bicyclette et qui présente une partie d'enclenchement (12) qui, dans l'état monté sur la bicyclette, dépasse au moins partiellement par l'ouverture (13) dans le logement (11) de la première pièce (9), dans lequel la liaison entre la partie d'enclenchement (12) et le logement (11) est amovible et se détache alors automatiquement lorsqu'une force écartant les pièces (9, 10) dépasse une valeur limite prédéterminée,
**caractérisé en ce que** l'ouverture (13) mène hors du logement (11) dans une direction (17) qui forme avec l'extension longitudinale de la partie (6) de la tringle en boucle (4), qui est reliée, dans l'état monté sur la bicyclette, à la première ou à la deuxième pièce (9, 10), un angle compris entre 30° et 150° de telle sorte que le mouvement d'écartement des pièces (9, 10) lors du détachement de la liaison dans l'état monté sur la bicyclette s'effectue dans une direction (17), qui diverge de la direction radiale (18) de la roue (1) de la bicyclette dans la zone de la tringle en boucle (4).

2. Dispositif (8) selon la revendication 1, **caractérisé en ce que** la direction (17), dans laquelle s'effectue le mouvement d'écartement des pièces (9, 10) lors du détachement de la liaison, forme avec la direction radiale (18) de la roue (1) un angle compris entre 30° et 150°.

3. Dispositif (8) selon l'une quelconque des revendications 1 ou 2, **caractérisé en ce que** l'ouverture (13) mène hors du logement (11) dans une direction (17), qui forme avec l'extension longitudinale de la partie (6) de la tringle en boucle (4), qui est reliée à la première ou à la deuxième pièce (9, 10) dans l'état monté sur la bicyclette, un angle compris entre 60° et 120°.

4. Dispositif (8) selon l'une quelconque des revendications 1 à 3, **caractérisé en ce que** le logement (11) et la partie d'enclenchement (12) sont formés de telle sorte que le mouvement de retrait de la partie d'enclenchement (12) s'effectue dans la direction (17), dans laquelle l'ouverture (13) mène hors du logement (11).

5. Dispositif (8) selon l'une quelconque des revendications 1 à 4, **caractérisé en ce que** l'ouverture (13) du logement (11) est disposée, dans l'état monté sur la bicyclette, sur le côté supérieur de la première pièce (9).

6. Dispositif (8) selon l'une quelconque des revendications 1 à 5, **caractérisé en ce que** le logement (11) présente une contre-dépouille.

7. Dispositif (8) selon la revendication 6, **caractérisé en ce que** la partie d'enclenchement (12), dans l'état relié, est maintenue par la contre-dépouille du logement (11) dans celui-ci.

8. Dispositif (8) selon l'une quelconque des revendications 1 à 7, **caractérisé en ce que** le logement (11) présente une zone creuse partiellement cylindrique.

9. Dispositif (8) selon la revendication 8, **caractérisé en ce que** la partie (12) présente une zone partiellement cylindrique qui s'enclenche, dans l'état relié, dans la zone creuse partiellement cylindrique du logement (11).

10. Dispositif (8) selon l'une quelconque des revendications 1 à 9, **caractérisé en ce que** le logement (11) et la partie d'enclenchement (12) sont formés de telle sorte que le détachement automatique de la liaison commence par un mouvement de retrait unilatéral de la partie d'enclenchement (12) hors du logement (11).

11. Dispositif (8) selon la revendication 10, **caractérisé en ce que** le logement (11) et la partie d'enclenchement (12) sont formés de telle sorte que le mouvement de retrait de la partie d'enclenchement (12) commence au niveau de l'extrémité éloignée du moyeu (19) de la roue (1) et se poursuit dans la direction longitudinale de la partie (6) de la tringle en boucle (4).

12. Dispositif (8) selon l'une quelconque des revendications 1 à 11, **caractérisé en ce que** l'une des deux pièces (9, 10) comprend une zone de logement destiné à la partie de la tringle en boucle ainsi que des moyens de fixation destinés à l'immobilisation de la partie (6) de la tringle en boucle (4).

13. Dispositif (8) selon l'une quelconque des revendications 1 à 12, **caractérisé en ce que** l'une des deux pièces (9, 10) comprend des moyens de fixation destinés à la fixation sur la bicyclette.

14. Agencement d'une tringle en boucle (4), servant au maintien d'un garde-boue (3), sur le cadre (2) d'une bicyclette au moyen d'un dispositif (8), **caractérisé en ce que** le dispositif (8) est un dispositif (8) selon l'une des revendications 1 à 13.

15. Agencement selon la revendication 14, **caractérisé en ce que** l'agencement comprend deux dispositifs (8) selon l'une des revendications 1 à 13, qui sont installés respectivement sur les parties (5, 6) de la tringle en boucle (4).
